# EUROPÄISCHE PATENTSCHRIFT

(11) **EP 1 633 462 B1**
(45) Veröffentlichungstag und Bekanntmachung des Hinweises auf die Patenterteilung: **16.09.2009**
(21) Anmeldenummer: 04739262.6
(22) Anmeldetag: 19.05.2004
(51) Int. Cl.: B01D 61/36, B01D 63/06

(54) **MEMBRAN-ROHRMODUL MIT BEHEIZBARER KAMMER**
TUBULAR MEMBRANE MODULE WITH HEATING CHAMBER
MODULE TUBULAIRE A MEMBRANE AVEC CHAMBRE DE CHAUFFAGE

(30) Priorität: 23.05.2003 DE 10323440
(43) Veröffentlichungstag der Anmeldung: 15.03.2006
(73) Patentinhaber: Sulzer Chemtech GmbH - Membrantechnik, 66540 Neumkirchen (DE)
(72) Erfinder: BRÜSCHKE, Hartmut, 69226 Nussloch (DE); WYNN, Patrick, Nicholas, Redwood City, CA 94062 (US); MARGGRAFF, Frank-Klaus, 66424 Homburg (DE)
(74) Vertreter: Bublak, Wolfgang
(86) Internationale Anmeldenummer: PCT/EP2004/005405
(87) Internationale Veröffentlichungsnummer: WO 2004/103531

(56) Entgegenhaltungen:
- EP-A- 0 343 895
- WO-A-03/000389
- DE-A- 19 900 432
- US-A- 4 376 095
- US-A- 4 791 054

## Beschreibung

Die Erfindung betrifft einen Membran-Rohrmodul mit integriertem Wärmetauscher.

In der Membrantechnologie zur Trennung von Flüssigkeits- und Gasgemischen werden die verwendeten Membranen in zweckmäßiger Anordnung zu Modulen zusammengefasst. Allgemein bekannte Formen dieser Module sind Faltmembran-, Platten- und Wickelmodul einerseits sowie Hohlfaser-, Kapillar- und Tubular- oder Rohrmodul andererseits. Die zuerst genannte Modulgruppe findet für Flachmembranen und die zweite Gruppe für schlauchförmige Membranen Verwendung. Die Durchmesser der einzelnen Membranschläuche sind unterschiedlich. Sie liegen beim Hohlfasermodul im Bereich von 30 bis 100 µm, beim Kapillarmodul im Bereich von 0,2 bis 3 mm und beim Tubular- oder Rohrmodul im Bereich von 4 bis 50 mm. Der transmembrane Fluss ist bei Hohlfasern von außen nach innen gerichtet, in Kapillarmembranen kann er sowohl von innen nach außen als auch von außen nach innen erfolgen, und bei Tubularmembranen ist er im Allgemeinen von innen nach außen gerichtet.

Beim Tubular- oder Rohrmodul liegt die Membran in Schlauchform auf der Innenseite druckfester Stützrohre, wobei das Material der Stützrohre eine hinreichende Porosität aufweisen und für das Permeat durchlässig sein kann. Ist das Material des Stützrohres selber für das Permeat undurchlässig, so muss das Stützrohr eine hinreichend große Anzahl von Bohrungen (Öffnungen) zur Abfuhr des Permeates aufweisen. In diesem Fall ist es sinnvoll, zwischen Stützrohr und Membran ein dünnes, poröses Rohr, zum Beispiel aus porösem Polyethylen anzuordnen, das zum einen den Quertransport des Permeats zu den in kurzen Abständen angeordneten Bohrungen im Stützrohr nicht behindert, und zum anderen der Membran, insbesondere im Bereich dieser Bohrungen, die erforderliche Abstützung bietet.

Die Membranen sind entweder auswechselbar oder auch fest auf das Stützmaterial aufgebracht. Aufgrund der beschriebenen Konstruktion hat sich in der Technik für Module mit schlauchförmigen Membranen des angegebenen Durchmessers (im allgemeinen im Bereich von 4 bis 50 mm, die in der Technik als Tubularmembranen bezeichnet werden), die mit einer Stützschicht ausgerüstet sind, die Bezeichnung Rohrmodul durchgesetzt, weshalb nachfolgend die Bezeichnung Rohrmodul für Module mit Tubularmembranen verwendet wird. Die Tubularmembranen eines Rohrmoduls können, in Abhängigkeit von dem jeweiligen Verfahren, alle in Serie (nacheinander) von dem zu trennenden Gemisch durchströmt werden, oder zwei oder mehr Tubularmembranen werden parallel durchströmt. Es kann somit, entsprechend der Anforderung des Prozesses, jede Kombination von paralleler und serieller Durchströmung verwirklicht werden.

Nach Maßgabe der speziellen Ausgestaltung der Tubularmembranen werden diese zum Beispiel für die Verfahren der Mikro-, Ultra- und Nanofiltration oder für die Verfahren der Umgekehrten Osmose und Pervaporation bzw. Dampfpermeation eingesetzt. Bei dem Verfahren der Pervaporation zur Trennung von Flüssigkeitsgemischen wird die zur Verdampfung des Permeates benötigte Wärme der fühlbaren Wärme des Flüssigkeitsgemisches entzogen, die dadurch entstehende Temperaturerniedrigung führt zu einer Reduktion der treibenden Kraft und des transmembranen Flusses und somit der Leistung des Verfahrens. Bei der Trennung von Dampf- oder Gasgemischen kann es durch unvermeidbare Wärmeverluste zu einer Abkühlung und Kondensation von Komponenten des Gemisches kommen, was wiederum zu einer Verblockung der Membran führen kann. Die verloren gegangene Wärme muss dem zu trennenden Gemisch daher möglichst laufend zugeführt werden. Bei den bekannten Rohrmodulen erfolgt die Wärmezufuhr stufenweise durch Aufheizen des zu trennenden Ausgangsgemisches außerhalb des Moduls in zwischengeschalteten Wärmetauschern. Nach dem Verlassen des Wärmetauschers und dem Eintritt des Ausgangsgemisches in den Rohrmodul nach dem Stand der Technik ist keine Wärmezufuhr mehr möglich. Insbesondere bei Rohrmodulen mit sehr langen Membranschläuchen bzw. großer Membranfläche und einer gro- und dem Eintritt des Ausgangsgemisches in den Rohrmodul nach dem Stand der Technik ist keine Wärmezufuhr mehr möglich. Insbesondere bei Rohrmodulen mit sehr langen Membranschläuchen bzw. großer Membranfläche und einer großen Permeatmenge kann es jeweils zu einer erheblichen Abkühlung des Ausgangsgemisches kommen, wodurch die Trennung beeinträchtigt wird oder sogar ganz zum Erliegen kommen kann. Daher können nur Module begrenzter Fläche eingesetzt werden, zwischen die jeweils ein Wärmetauscher geschaltet werden muss. Die dadurch unvermeidliche Begrenzung der Membranfläche je Modul und die erforderliche Anzahl an Zwischenwärmetauschern, die zusätzlich benötigte Verrohrung zwischen diesen Apparaten und der zusätzliche Regelaufwand führen, besonders bei größeren Anlagen, zu einem unwirtschaftlichen Anstieg der spezifischen Kosten je installierter Membranfläche.

Der Stand der Technik kann durch folgende Druckschriften veranschaulicht werden.

DE 199 00 432 A1 betrifft ein Membranmodul für die Stofftrennung bestehend aus einem Gehäuse und einem darin eingebauten Faserbündel, welches eine oder mehrere, insbesondere eine Vielzahl von, parallel angeordneten semipermeablen Schlauchmembranen aufweist, die mit ihren Enden an Kopfplatten befestigt sind, wobei die Innenseite der Schlauchmembranen mit entsprechenden, in mindestens einer der Kopfplatten angeordneten Kanälen verbunden sind.

EP 343 895 A2 offenbart ein Membranmodul, in dem sich ein Bündel von Membranleitungen befindet, welche über Einlass- und Auslassanschlüsse miteinander verbunden sind.

WO-03/000 389 offenbart ein Hohlfasermembranmodul zur Pervaporation, wobei die einzelnen Bündel Trennwände eingelassen sind, an die eine Heizkammer angrenzt.

Die Bündel sind mit U-förmigen Verbindungen verbunden.

Gelöst wird diese Aufgabe durch ein Membran-Rohrmodul gemäß Anspruch 1.

Bei den bekannten Membran-Rohrmodulen sind die in dem zylindrischen Géhäuse verlaufenden Tubularmembran-Abschnitte an ihren Enden unter Ausbildung eines Endlos-Membranschlauches verbunden. Hiervon unterscheidet sich der erfindungsgemäße Rohrmodul dadurch, dass eine gewisse Anzahl von benachbarten Tubularmembran-Abschnitten an einem Ende des zylindrischen Gehäuses, oder auch an beiden Enden, offen gelassen wird, und diese Enden dann durch die

Die Kammer hat also die Funktion eines Wärmetauschers, wobei die Wärmezufuhr zum Beispiel durch Dampf oder einen anderen Wärmeträger erfolgen kann.

In einer besonderen Ausgestaltung des erfindungsgemäßen Rohrmoduls sind die Tubularmembran-Abschnitte an einem Ende, oder auch an beiden Enden, in einer mit Bohrungen versehenen Platte fixiert. Durch diese Bohrungen werden dann die offenen Enden der U-förmigen Verbindungsrohre geführt, wobei selbstverständlich eine Abdichtung vorzusehen ist. Nicht an den Wärmetauscher angeschlossene Tubularmembran-Abschnitte können entweder innerhalb des Gehäuses verbunden sein oder, bei Fixierung durch Bohrungen in der Endplatte, durch entsprechende Ausnehmungen in der Endplatte verbunden sein.

Das zylindrische Gehäuse des Rohrmoduls ist zum Beispiel aus Stahl oder einem anderen Metall, gegebenenfalls auch aus Kunststoff mit entsprechenden Austrageöffnungen für das anfallende Permeat.

Die als Wärmetauscher dienende beheizbare Kammer besitzt entsprechende Ein- und Austragsöffnungen für den Wärmeträger. Im Fall von Dampf als Wärmeträger ist die Kammer entsprechend temperatur- und druckfest ausgestaltet, vorzugsweise aus Stahl.

In einer bevorzugten Ausführungsform sind an beiden Seiten des zylindrischen Gehäuses beheizbare Kammern als Wärmetauscher vorgesehen. Jede Kammer kann mit einer entsprechenden Vorrichtung zur Temperaturregelung versehen sein. Sind an beiden Seiten des zylindrischen Gehäuses Wärmetauscher vorhanden, so muss mindesten eine dieser Kammern mit entsprechenden Durchführungen für die Zu- und Abführung des im Modul zu behandelnden Fluids versehen sein.

In einer weiteren bevorzugten Ausführungsform sind die ein- oder beidseitig vorgesehenen Kammern als abnehmbare Einrichtungen ausgebildet. Dies erleichtert bei Störungen die Auswechslung von beschädigten Tubularmembran-Abschnitten. Der erfindungsgemäße Rohrmodul ist für sämtliche Tubularmembranen geeignet, und zwar zum einen für den klassischen Typ mit Stützrohr, bei dem das Stützrohr entweder für das Permeat durchlässig ist oder bei undurchlässigem Stützrohr zwischen Stützrohr und Membran ein weiteres dünnes, poröses Rohr eingeschoben wird. Zum anderen und vorzugsweise auch für solche Membranen, bei denen Membranschicht, Stützschicht und gegebenenfalls eine weitere Trägerschicht bereits eine Einheit bilden. Für die Trennung von Flüssigkeitsgemischen nach dem Verfahren der Pervaporation werden hierbei bevorzugt mehrschichtige Membranen eingesetzt, die aus mindestens zwei Schichten unterschiedlicher chemischer Zusammensetzung bestehen, wobei gegebenenfalls zusätzlich eine Trägerschicht aus Vlies oder Gewebe vorhanden ist. Im Allgemeinen besitzen derartige Komposit- oder Verbundmembranen eine poröse Unterschicht, die im Wesentlichen die mechanische Beständigkeit der Membran bedingt (Stützschicht), und eine hierauf befindliche Schicht aus einem Material unterschiedlicher chemischer Beschaffenheit, die im Wesentlichen die Trenneigenschaften der Membran bestimmt (Trennschicht). Vorzugsweise befindet sich unterhalb der Stützschicht zusätzlich eine Trägerschicht aus Vlies oder Gewebe. Derartige Kompositmembranen, die als Flachmembranen zur Trennung von durch Destillation schwer zu trennenden Flüssigkeitsgemischen nach dem Verfahren der Pervaporation bzw. der Dampfpermeation oder zur Gastrennung Verwendung finden, sind aus der EP-B-0 096 339 bekannt. Diese Flachmembranen finden, nach Umformung zu einer Schlauchmembran, Verwendung in einer bevorzugten Ausführungsform des erfindungsgemäßen Rohrmoduls. Die Tubularmembranen besitzen hierbei Durchmesser im Bereich von 4 bis 50 mm und vorzugsweise 8 bis 30 mm, wobei sich für die Praxis Durchmesser von 12 bis 25 mm als besonders vorteilhaft erwiesen haben.

In einer besonderen Ausführungsform ist die Tubularmembran nach ihrer Formung mit einer oder mehreren Außenlagen von Vlies oder Gewebe umhüllt oder umsponnen, so dass die Tubularmembran bereits eine hinreichende Druckfestigkeit besitzt und ohne zusätzliches Stützrohr im Modul eingesetzt werden kann.

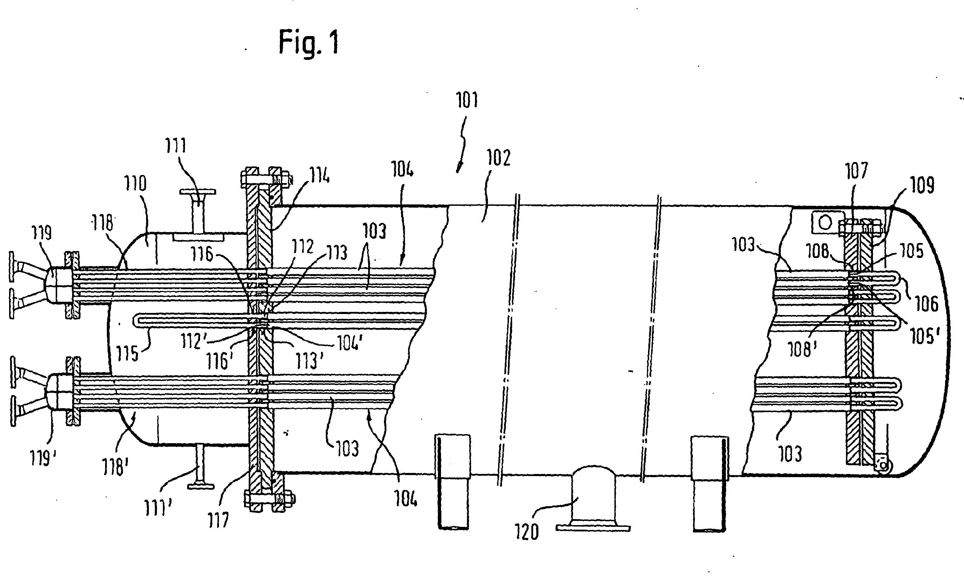

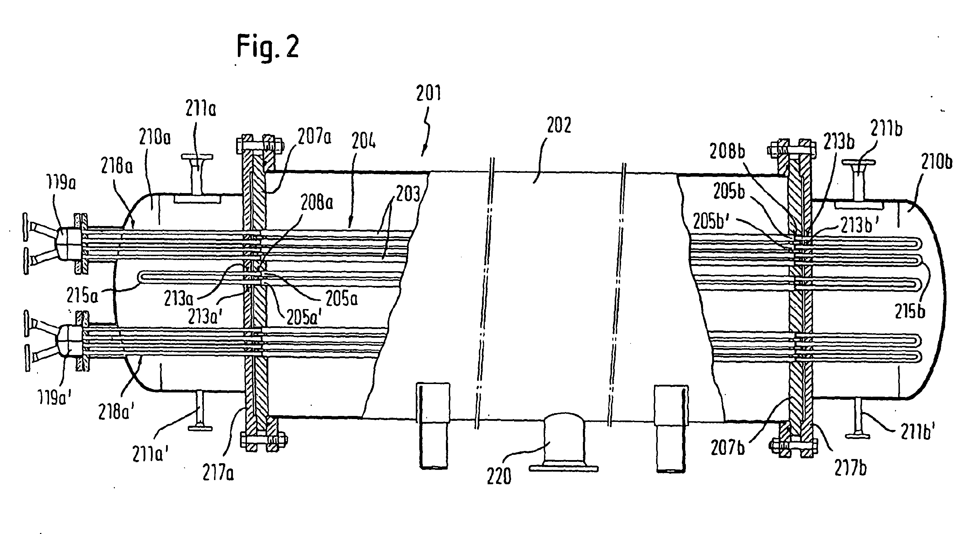

Nachfolgend ist die Erfindung anhand der Zeichnungen beschrieben. Hierbei zeigt Fig. 1 einen Modul nach der vorliegenden Erfindung mit einer beheizbaren Kammer an nur einer Seite und Fig. 2 einen solchen mit jeweils einer beheizbaren Kammer an beiden Seiten des Moduls.

Der Modul 101 von Fig. 1 besitzt ein zylindrisches Gehäuse 102 mit einer Vielzahl von axial verlaufenden Stützrohren 103 mit Tubularmembran-Abschnitten 104. In einer Alternative (nicht dargestellt) sind Tubularmembran-Abschnitte hinreichender Druckfestigkeit ohne Stützrohre eingesetzt. Das zylindrische Gehäuse 102 ist mit mindestens einem Anschluss 120 für die Abfuhr des durch die Tubularmembran hindurchtretenden Permeats versehen.

In Fig. 1 ist an einer Seite des Moduls 101 jeweils ein Ende 105 eines Tubularmembran-Abschnitts 104 in einer Bohrung 108 einer Trennwand 107 fixiert und mit dem Ende 105' eines zweiten Tubularmenbran-Abschnitts 104', fixiert in einer Bohrung 108' in der Trennwand 107, über ein Verbindungsstück 106 verbunden. In Fig. 1 ist dieses Verbindungsstück 106 ein U-förmiger Rohrbogen Über Aussparungen in der Endplatte 109 können auch mehrere Tubularmembran-Abschnitte miteinander verbunden sein. Zwischen Endplatte 109 und Trennwand 107 befinden sich entsprechende Dichtungen (nicht dargestellt).

Auf der anderen Seite des Moduls 101 befindet sich eine beheizbare Kammer 110 mit Anschlüssen 111, 111' für die Zu- und Abfuhr eines Heizmediums. Ein Ende 112 eines Tubularmembran-Abschnitts ist in einer Bohrung 113 einer Trennwand 114 fixiert und über ein U-förmiges Verbindungsrohr 115 mit dem in einer Bohrung 113' der Trennwand 114 fixierten Ende 112' eines zweiten Tubularmembran-Abschnittes 104' verbunden. Die Länge des U-förmigen Verbindungsrohres 115 ist so gewählt, dass ein ausreichender Wärmeeintrag in das in dem U-förmigen Verbindungsrohr 115 fließende zu trennende Gemisch gewährleistet ist. Das U-förmige Verbindungsrohr 115 kann seinerseits in Bohrungen 116, 116' einer Endplatte 117 fixiert sein. Zwischen Endplatte 117 und Trennwand 114 befindet sich dann eine entsprechende Dichtung (nicht dargestellt). Durch die beheizbare Kammer 110 gehen Durchführungen 118, 118' mit Anschlüssen 119, 119' für die Zu- und Abführung des zu trennenden Gemisches.

Figur 2 zeigt einen Modul 201 nach der vorliegenden Erfindung mit zwei beheizbaren Kammern 210a, 210b. Hierbei enthält ein zylindrisches Gehäuse 202 des Moduls 201 eine Vielzahl von axial verlaufenden Stützrohren 203 mit Tubularmembran-Abschnitten 204. In einer alternativen Ausführungsform (nicht dargestellt) sind Tubularmembranen hinreichender Druckfestigkeit ohne Stützrohre eingesetzt. Das zylindrische Gehäuse 202 des Moduls 201 ist mit mindestens einem Anschluss 220 für die Abfuhr des durch die Tubularmembran hindurchtretenden Permeats versehen. Jede Tubularmembran 204 ist an beiden Enden 205a, 205b in Bohrungen 208a, 208b einer Trennwand 207a, 207b fixiert. Jeder Bohrung 208a, 208b in der Trennwand 207a, 207b entspricht eine Bohrung 213a, 213b in einer Endplatte 217a, 217b. In den Bohrungen 213a, 213b der Endplatten 217a, 217b sind auf der Seite, die nicht zur der Trennwand 207a, 207b zeigt, U-förmige Verbindungsrohre 215a, 215b fixiert, die jeweils zwei Bohrungen 213a, 213a'; 213b, 213b' in der Endplatte 217a, 217b, und damit jeweils zwei Enden 205a, 205a' ; 205b, 205b' von Tubularmembran-Abschnitten 204 miteinander verbinden.

Zwischen Trennwand 207 und Endplatte 217 befindet sich gegebenenfalls eine Dichtung (nicht dargestellt). Die U-förmigen Verbindungsrohre 215 ragen in die Heizkammern 210 hinein, ihre Länge bestimmt sich aus der Wärmemenge, die durch ihre Oberfläche auf das sie durchströmende zu trennende Fluidgemisch zu übertragen ist.

Die Heizkammem 210a, 210b sind mit Anschlüssen 211a, 211a'; 211b, 211b' für die Zu- und Abfuhr des jeweiligen Heizmediums versehen. Durch mindestens eine der beheizbaren Kammern (hier 210a) gehen Durchführungen 218a, 218a' mit Anschlüssen 119a, 119a' für die Zu- und Abführungen des zu trennenden Gemisches. In einer besonderen Ausführungsform sind auch auf der rechten Seite des Moduls den Anschlüssen 119a, 119a' entsprechende Anschlüsse vorgesehen.

Für die industrielle Anwendung bietet ein Modul nach der vorliegenden Erfindung erhebliche Vorteile. Bei den bisher für die Trennung von Fluidgemischen nach dem Verfahren der Pervaporation eingesetzten Modulen ist die Membranfläche, die in einer Moduleinheit sinnvoll untergebracht werden kann, begrenzt, da eine zu starke Abkühlung durch die Verdampfung des Permeates und damit eine zu starke Abnahme des Flusses vermieden werden muss. In dem Modul nach der vorliegenden Erfindung entfällt diese Begrenzung, da nach Durchlaufen des zu trennenden Fluidgemisches durch einen begrenzten Tubularmembran-Abschnitt eine Aufheizung in den beheizbaren Kammern mittels Wärmetausch erfolgt. Damit wird jeder Wärmeverlust sofort ersetzt, die Membranen werden bei nahezu konstant hoher Temperatur und damit unter optimaler Ausnutzung des Flusses betrieben. Dies führt, vor allem beim Verfahren der Pervaporation, zu einer deutlichen Reduzierung der benötigten Membranfläche und zu einer Kosteneinsparung. Durch den Wegfall der Verrohrung zwischen separaten Modulen und Wärmetauschern ergibt sich eine weitere Kosteneinsparung. Bei den Verfahren der Dampfpermeation und Gaspermeation wird die Kondensation von Bestandteilen des Zulaufgemisches auf der Membranoberfläche und damit eine Verblockung der Membran und eine Behinderung des transmembranen Transportes vermieden.

## Patentansprüche

1. Membran-Rohrmodul, bei dem in einem zylindrischen Gehäuse (102), das ein- oder beidseitig eine beheizbare Kammer (110) mit darin angeordneten U-förmigen Verbindungsrohren (115) aufweist, eine Vielzahl von in Axialrichtung verlaufenden Tubularmembran-Abschnitten (104) angeordnet ist, **dadurch gekennzeichnet, dass** die Tubularmembran-Abschnitte (104) einzeln durch Stützrohre (103) abgestützt werden, dass die offenen Enden der Tubularmembran- Abschnitte (104) beidseitig in einer Trennwand (107, 114) fixiert sind, die U-förmigen Verbindungsrohre (115) in einer Endplatte (107, 109) fixiert sind, mit beiden Offenen Enden durch die Trennwand hindurch führen und jeweils zwei offene Tubularmembran-Abschnitte (112, 112') miteinander verbinden.

2. Membran-Rohrmodul nach Anspruch 1, **dadurch gekennzeichnet, dass** die beheizbare Kammer (110) mit den darin befindlichen U-förmigen Verbindungsrohren (115) und der Endplatte (107) eine Einheit bildet, die vom zylindrischen Gehäuse (102) abnehmbar ist.

3. Membran-Rohrmodul nach Anspruch 1, **dadurch gekennzeichnet, dass** die offenen Enden (105,105') der in der Trennwand (107) fixierten Tubularmembran-Abschnitte durch Aussparungen in der Endplatte (109) miteinander verbunden sind.

4. Verwendung des Membran-Rohrmoduls nach einem der Ansprüche 1 bis 3 zur Trennung von Flüssigkeitsgemischen nach dem Verfahren der Pervaporation.

## Claims

1. A membrane tube module, in which in a cylindrical housing (102) a multitude of axially arranged tubular membrane segments (104) is arranged, the cylindrical housing (102) comprising, at one or both sides, a heatable chamber (110) containing U-shaped connecting pipes (115) arranged therein, **characterized in that** the tubular membrane segments (104) are individually supported by support tubes (103), that the open ends of the tubular membrane segments (104) are fixed in a separating wall (107, 114) at both sides, the U-shaped connecting pipes (115) are fixed in an end plate (107, 109), lead through the separating wall with both open ends, and connect respective two open tubular membrane segments (112, 112') with each other.

2. The membrane tube module of claim 1, **characterized in that** the heatable chamber (110) forms a unit together with the U-shaped connecting pipes (115) contained therein and the end plate (107), which unit is removable from the cylindrical housing (102).

3. The membrane tube module of claim 1, **characterized in that** the open ends (105, 105') of the tubular membrane segments fixed in the separating wall (107) are connected with each other by clearances in the end plate (109).

4. Use of the membrane tube module according to any of claims 1 to 3 for the separation of liquid mixtures in a pervaporation process.

## Revendications

1. Module tubulaire à membrane dans lequel une pluralité de portions de membrane tubulaire (104) s'étendant en direction axiale sont disposées dans un carter cylindrique (102) qui comporte, sur un côté ou sur les deux, une chambre chauffable (110) avec, disposés à l'intérieur, des tubes de liaison (115) en forme de U, **caractérisé en ce que** les portions de membrane tubulaire (104) sont supportées individuellement par des tubes d'appui (103), **en ce que** les extrémités ouvertes des portions de membrane tubulaire (104) sont immobilisées des deux côtés dans une cloison (107, 114), les tubes de liaison (115) en forme de U sont immobilisés dans une plaque d'extrémité (107, 109), leurs deux extrémités ouvertes traversant la cloison et reliant à chaque fois entre elles deux portions de membrane tubulaire ouvertes (112, 112') .

2. Module tubulaire à membrane selon la revendication 1, **caractérisé en ce que** la chambre chauffable (110) forme, avec les tubes de liaison (115) en forme de U disposés à l'intérieur et avec la plaque d'extrémité (107), un ensemble qui peut être détaché du carter cylindrique (102).

3. Module tubulaire à membrane selon la revendication 1, **caractérisé en ce que** les extrémités ouvertes (105, 105') des portions de membrane tubulaire immobilisées dans la cloison (107) sont reliées entre elles par des évidements ménagés dans la plaque d'extrémité (109).

4. Utilisation du module tubulaire à membrane selon une des revendications 1 à 3 pour séparer des mélanges de liquides selon le procédé de la pervaporation.
